# EUROPÄISCHE PATENTSCHRIFT

(11) **EP 2 436 229 B1**
(45) Veröffentlichungstag und Bekanntmachung des Hinweises auf die Patenterteilung: **10.08.2016**
(21) Anmeldenummer: 10720423.2
(22) Anmeldetag: 21.05.2010
(51) Int. Cl.: H05B 3/86

(54) **ELEKTRISCH GROßFLÄCHIG BEHEIZBARER, TRANSPARENTER GEGENSTAND, VERFAHREN ZU SEINER HERSTELLUNG UND SEINE VERWENDUNG**
ELECTRICALLY EXTENSIVELY HEATABLE, TRANSPARENT OBJECT, METHOD FOR THE PRODUCTION THEREOF, AND USE THEREOF
OBJET TRANSPARENT DE GRANDE SURFACE POUVANT ÊTRE CHAUFFÉ ÉLECTRIQUEMENT, ET PROCÉDÉ DE FABRICATION ET UTILISATION DUDIT OBJET

(30) Priorität: 29.05.2009 DE 102009025888
(43) Veröffentlichungstag der Anmeldung: 04.04.2012
(73) Patentinhaber: Saint-Gobain Glass France, 92400 Courbevoie (FR)
(72) Erfinder: PHAN, Dang Cuong, 52062 Aachen (DE); SCHALL, Günther, 52372 Kreuzau (DE)
(74) Vertreter: Lendvai, Tomas
(86) Internationale Anmeldenummer: PCT/EP2010/057037
(87) Internationale Veröffentlichungsnummer: WO 2010/136400

(56) Entgegenhaltungen:
- EP-A1- 1 672 960
- WO-A2-03/024155
- US-B1- 6 670 581

## Beschreibung

Die vorliegende Erfindung betrifft einen neuen transparenten, elektrisch großflächig beheizbaren Gegenstand, umfassend ein transparentes, elektrisch isolierendes Substrat mit einer großflächigen, elektrisch leitfähigen, transparenten Beschichtung, enthaltend mindestens einen örtlich begrenzten, von der elektrisch leitfähigen Beschichtung freien, transparenten Bereich.

Außerdem betrifft die vorliegende Erfindung ein neues Verfahren zur Herstellung eines transparenten, elektrisch großflächig beheizbaren Gegenstands, umfassend ein transparentes Substrat mit einer großflächigen, elektrisch leitfähigen, transparenten Beschichtung, enthaltend mindestens einen örtlich begrenzten, von der elektrisch leitfähigen Beschichtung freien, transparenten Bereich.

Nicht zuletzt betrifft die vorliegende Erfindung die neue Verwendung des neuen transparenten Gegenstands, umfassend ein transparentes, elektrisch isolierendes Substrat mit einer transparenten, elektrisch großflächig beheizbaren Beschichtung, enthaltend mindestens einen örtlich begrenzten, von der elektrisch leitfähigen Beschichtung freien, transparenten Bereich, sowie des mithilfe des neuen Verfahrens hergestellten transparenten, elektrisch großflächig beheizbaren Gegenstands, umfassend ein transparentes Substrat mit einer großflächigen, elektrisch leitfähigen, transparenten Beschichtung, enthaltend mindestens einen örtlich begrenzten, von der elektrisch leitfähigen Beschichtung freien, transparenten Bereich.

Aus dem europäischen Patent EP 1 183 912 B1 ist eine Autoverglasungsplatte oder - scheibe, insbesondere eine Windschutzscheibe, mit einer transparenten, elektrisch großflächig beheizbaren Beschichtung für den Sonnenschutz bzw. für die Solarsteuerung oder Solarregelung bekannt. Die elektrisch beheizbare Beschichtung ist mit zwei elektrischen Sammelschienen verbunden, die die elektrische Leistung auf die elektrisch beheizbare Beschichtung übertragen. Diese bekannte Windschutzscheibe weist mindestens ein Datenübertragungsfenster oder so genanntes Kamera- oder Sensorfeld auf, durch das eine Kamera oder ein Sensor durch die Windschutzscheibe "hindurch blicken" kann. Dieses Fenster oder Feld ist in teilweisem Kontakt zu der elektrisch großflächig beheizbaren Beschichtung positioniert. Durch diese Diskretstelle wird aber die Homogenität des elektrischen Feldes in der großflächigen, elektrisch leitfähigen Beschichtung zerstört. Dadurch können Heiß- und Kaltstellen in der Windschutzscheibe entstehen, die thermische Spannungen, die zu einer Schädigung der Windschutzscheibe führen können, und/oder Lichtflecken, die die Sicht behindern können, hervorrufen.

Diesem schwer wiegendem Problem versucht das europäischen Patent EP 1 183 912 B1 dadurch zu begegnen, dass wenigstens ein Bereich des Umfangs der Diskretstelle durch ein elektrisch leitfähiges Band begrenzt ist, das mit einer Sammelschiene verbunden ist und das einen elektrischen Widerstand aufweist, der beträchtlich geringer ist als der elektrische Widerstand in Ohm pro Quadrat der großflächigen, elektrisch leitfähigen Beschichtung. Insbesondere soll das elektrisch leitfähige Band einen elektrischen Widerstand von <0,35 und insbesondere <0,05 Ohm pro Quadrat haben.

Zwar kann durch diese Maßnahme die Homogenität des elektrischen Feldes verbessert und die Bildung von Heiß- und Kaltstellen und/oder von Lichtflecken bis zu einem gewissen Grad unterdrückt werden, indes befriedigt das erreichte Niveau nicht in vollem Umfang, sondern bedarf der weiteren Verbesserung.

WO 03/024155 A2 offenbart ebenfalls eine mittels einer transparenten Beschichtung beheizbare Fensterscheibe, welche einen als Datenübertragungsfenster dienenden beschichtungsfreien Bereich aufweist. Zur Verbesserung der Homogenität der Heizleistung weist die Fensterscheibe eine zusätzliche elektrische Sammelschiene auf, welche die Peripherie des beschichtungsfreien Bereichs teilweise umgibt.

Der vorliegenden Erfindung liegt die Aufgabe zu Grunde, die Nachteile des Standes der Technik zu beheben und insbesondere die aus dem europäischen Patent EP 1 183 912 B1 bekannten Autoverglasungsplatten oder -scheiben, insbesondere Windschutzscheiben, hinsichtlich der Homogenität des elektrischen Feldes und der Unterdrückung der Bildung von Heiß- und Kaltstellen weiter zu verbessern, um die Schädigung der Scheiben durch thermische Spannungen und/oder die Behinderung der Sicht durch Lichtflecken wirksam zu verhindern.

Insbesondere war es die Aufgabe der vorliegenden Erfindung, neue, verbesserte, transparente, elektrisch großflächig beheizbare Gegenstände, insbesondere neue Verbundsicherheitsglasscheiben, speziell neue Windschutzscheiben, zur Verfügung zu stellen, die mit einer großflächigen, transparenten Beschichtung aus einem elektrisch leitfähigen Material beschichtet sind, worin sich mindestens ein örtlich begrenzter, von der elektrisch leitfähigen Beschichtung freier, transparenter Bereich, insbesondere ein Kamera- oder Sensorfeld, befindet, dessen Peripherie zumindest teilweise von einem elektrisch leitfähigen Band umgeben ist, dessen Widerstand in Ohm pro Quadrat wesentlich geringer ist als der Widerstand in Ohm pro Quadrat der großflächigen, elektrisch leitfähigen Beschichtung. Die neuen, elektrisch großflächig beheizbaren, transparenten Gegenstände sollen insbesondere hinsichtlich der Homogenität des elektrischen Feldes und der Unterdrückung der Bildung von Heiß- und Kaltstellen signifikant verbessert sein, um die Schädigung der Scheiben durch thermische Spannungen und/oder Behinderung der Sicht durch Lichtflecken wirkungsvoll zu verhindern.

Außerdem ist es die Aufgabe der vorliegenden Erfindung, ein neues, verbessertes Verfahren zur Herstellung von transparenten, elektrisch großflächig beheizbaren Gegenständen, insbesondere Verbundsicherheitsglasscheiben, speziell Windschutzscheiben, zur Verfügung zu stellen, das die Nachteile des Standes der Technik nicht mehr länger aufweist, sondern in einfacher und sehr gut reproduzierbarer Weise in hohen Stückzahlen transparente, elektrisch großflächig beheizbare Gegenstände liefert, die eine transparente Beschichtung aus einem elektrisch leitfähigen Material aufweisen, wobei sich in der großflächigen, elektrisch leitfähigen Beschichtung mindestens ein örtlich begrenzter, von der elektrisch leitfähigen Beschichtung freier, transparenter Bereich, insbesondere ein Kamera- oder Sensorfeld, befindet dessen Peripherie zumindest teilweise von einem elektrisch leitfähigen Band umgeben ist, dessen Widerstand in Ohm pro Quadrat wesentlich geringer ist als der Widerstand in Ohm pro Quadrat der großflächigen, elektrisch leitfähigen Beschichtung. Die mithilfe des neuen Verfahrens hergestellten, elektrisch großflächig beheizbaren, transparenten Gegenstände sollen insbesondere hinsichtlich der Homogenität des elektrischen Feldes und der Unterdrückung der Bildung von Heiß- und Kaltstellen signifikant verbessert sein, um die Schädigung der Gegenstände durch thermische Spannungen und/oder die Behinderung der Sicht durch Lichtflecken wirkungsvoll zu verhindern.

Nicht zuletzt lag der vorliegenden Erfindung die Aufgabe zu Grunde, eine neue Verwendung für die neuen, verbesserten, elektrisch großflächig beheizbaren, transparenten Gegenstände und die mithilfe des neuen verbesserten Verfahrens hergestellten, elektrisch großflächig beheizbaren, transparenten Gegenstände in Fortbewegungsmitteln für den Verkehr zu Lande, zur Luft und zu Wasser sowie im Bau-, Möbel- und Gerätesektor zu finden, wobei es bei der neuen Verwendung insbesondere darauf ankommen soll, dass sich in den betreffenden elektrisch großflächig beheizbaren, transparenten Gegenständen bei Anlegung von elektrischer Spannung ein homogenes oder im Wesentlichen homogenes elektrisches Feld ohne Heiß- und Kaltstellen bildet, so dass keine thermischen Spannungen und/oder Lichtflecken mehr auftreten können.

Demgemäß wurde der neue, elektrisch großflächig beheizbare, transparente Gegenstand gefunden, der
- mindestens ein transparentes, elektrisch isolierendes Substrat,
- mindestens eine großflächige, elektrisch leitfähige, transparente Beschichtung, die mit
- zwei elektrischen Sammelschienen zur Übertragung elektrischer Leistung verbunden ist,
- mindestens einen örtlich begrenzten, von der elektrisch leitfähigen Beschichtung freien, transparenten Bereich und
- ein elektrisch leitfähiges Band, aufgebracht auf der Beschichtung, das
   - die Peripherie des mindestens einen Bereichs zumindest teilweise umgibt,
   - einen elektrischen Widerstand in Ohm pro Quadrat aufweist, der geringer ist als der elektrische Widerstand in Ohm pro Quadrat der Beschichtung
   umfasst, wobei
- das elektrisch leitfähige Band mindestens eine Unterbrechung aufweist und wobei der größte Teil des elektrisch leitfähigen Bandes nicht mit einer der Sammelschienen verbunden ist.

Im Folgenden wird der neue, elektrisch großflächig beheizbare, transparente Gegenstand als »erfindungsgemäßer Gegenstand« bezeichnet.

Außerdem wurde das neue Verfahren zur Herstellung eines elektrisch großflächig beheizbaren, transparenten Gegenstands gefunden, bei dem man
(I) ein elektrisch leitfähiges Material großflächig auf ein transparentes, elektrisch isolierendes Substrat aufbringt, so dass
   - mindestens eine transparente, elektrisch leitfähige Beschichtung, die das elektrisch leitfähige Material enthält oder hieraus besteht, und
   - mindestens ein örtlich begrenzter, von der Beschichtung freier, transparenter Bereich resultieren,
(II) die Beschichtung mit zwei Sammelschienen verbindet und
(III) in die Peripherie des Bereichs zumindest teilweise ein elektrisch leitfähiges Band auf die Beschichtung aufbringt, und einen elektrischen Widerstand in Ohm pro Quadrat aufweist, der geringer ist als der elektrische Widerstand in Ohm pro Quadrat der Beschichtung,
wobei der Verfahrenschritt (III) derart durchgeführt wird, dass das elektrisch leitfähige Band zumindest eine Unterbrechung aufweist, wobei der größte Teil des elektrisch leitfähigen Bandes nicht mit einer der Sammelschienen verbunden wird.

Im Folgenden wird das neue Verfahren zur Herstellung eines elektrisch großflächig beheizbaren, transparenten Gegenstandes als »erfindungsgemäßes Verfahren« bezeichnet.

Nicht zuletzt wurde die neue Verwendung des erfindungsgemäßen Gegenstands und des mithilfe des neuen Verfahrens hergestellten, elektrisch großflächig beheizbaren, transparenten Gegenstandes in Fortbewegungsmitteln für den Verkehr zu Lande, zur Luft und zu Wasser sowie im Bau-, Möbel- und Gerätesektor gefunden, was im Folgenden als »erfindungsgemäße Verwendung« bezeichnet wird.

Im Hinblick auf den Stand der Technik war es überraschend und für den Fachmann nicht vorhersehbar, dass die Aufgabe, die der vorliegenden Erfindung zugrunde lag, mithilfe des erfindungsgemäßen Gegenstands, des erfindungsgemäßen Verfahrens und der erfindungsgemäßen Verwendung gelöst werden konnte.

Insbesondere war es überraschend, dass der erfindungsgemäße Gegenstand die Nachteile des Standes der Technik nicht mehr länger aufwies, sondern dass er hinsichtlich der Homogenität des elektrischen Feldes und der Unterdrückung der Bildung von Heiß- und Kaltstellen signifikant verbessert war, wodurch die Schädigung der Scheiben durch thermische Spannungen und/oder die Behinderung der Sicht durch Lichtflecken wirkungsvoll verhindert wurden.

Außerdem war es überraschend, dass das erfindungsgemäße Verfahren in einfacher und sehr gut reproduzierbarer Weise in hohen Stückzahlen transparente, elektrisch großflächig beheizbare Gegenstände, insbesondere erfindungsgemäße Gegenstände, lieferte, die hinsichtlich der Homogenität des elektrischen Feldes und der Unterdrückung der Bildung von Heiß- und Kaltstellen signifikant verbessert waren, so dass die Schädigung der Scheiben durch thermische Spannungen und/oder die Behinderung der Sicht durch Lichtflecken wirkungsvoll verhindert wurde.

Nicht zuletzt war es überraschend, dass sich die erfindungsgemäßen Gegenstände und die Mithilfe des erfindungsgemäßen Verfahrens hergestellten, elektrisch großflächig beheizbaren, transparenten Gegenstände im Rahmen der erfindungsgemäßen Verwendung hervorragend in Fortbewegungsmitteln für den Verkehr zu Lande, zur Luft und zu Wasser sowie im Bau-, Möbel- und Gerätesektor verwenden ließen, wobei sich in ihnen bei Anlegung von elektrischer Spannung ein homogenes oder im Wesentlichen homogenes elektrisches Feld ohne Heiß- und Kaltstellen bildete, so dass keine thermischen Spannungen und/oder Lichtflecken mehr auftraten.

Die erfindungsgemäßen Gegenstände sind transparent. Dies bedeutet, dass sie zumindest in einzelnen Bereichen, vorzugsweise aber insgesamt, für elektromagnetische Strahlung, vorzugsweise elektromagnetische Strahlung einer Wellenlänge von 300 bis 1.300 nm, insbesondere aber für sichtbares Licht, durchlässig sind. »Durchlässig« bedeutet, dass die Transmission insbesondere für sichtbares Licht >50%, bevorzugt >75% und insbesondere >80% ist.

Die erfindungsgemäßen Gegenstände können unterschiedliche dreidimensionale Formen haben. So können sie planar oder leicht oder stark in einer Richtung oder mehreren Richtungen gebogen oder gekrümmt sein oder die Form regelmäßiger oder unregelmäßiger dreidimensionaler Körper, wie Kugeln, Zylinder, Kegel, Pyramiden mit dreieckiger oder viereckiger Grundfläche, Doppelpyramiden Quader, Ikosaeeder usw., haben. Insbesondere sind sie planar oder leicht oder stark in einer Richtung oder mehreren Richtungen des Raumes gebogen oder gekrümmt.

Die Größe der erfindungsgemäßen Gegenstände kann breit variieren und richtet sich nach dem jeweiligen Verwendungszweck im Rahmen der erfindungsgemäßen Verwendung. So können die erfindungsgemäßen Gegenstände eine Größenordnung von wenigen Zentimetern bis zu mehreren Metern haben. Insbesondere die planaren oder leicht oder stark in eine Richtung oder mehreren Richtungen des Raumes gebogenen oder gekrümmten Gegenstände können eine Fläche in der Größenordnung von 100 cm² bis 25 m², vorzugsweise >1 m², haben. Die erfindungsgemäßen Gegenstände können aber auch Flächen haben, wie sie Windschutzscheiben, Seitenscheiben und Heckscheiben für Kraftfahrzeuge oder großflächige Scheiben, wie sie im Bausektor verwendet werden, üblicherweise aufweisen.

Die erfindungsgemäßen Gegenstände können Durchbrechungen aufweisen. Diese können der Aufnahme von Vorrichtungen zur Halterung, zur Verbindung mit anderen Gegenständen und/oder der Durchführung von Leitungen, insbesondere elektrischen Leitungen, dienen.

Der erfindungsgemäße Gegenstand enthält mindestens ein transparentes, elektrisch isolierendes Substrat. Vorzugsweise hat das Substrat für elektromagnetische Strahlung einer Wellenlänge von 300 bis 1.300 nm, insbesondere aber für sichtbares Licht, eine hohe Transmission, vorzugsweise eine Transmission >50%, bevorzugt >75%, besonders bevorzugt >85% und insbesondere >95%.

Demgemäß sind im Grunde alle transparenten, elektrisch isolierenden Substrate geeignet, die eine solche Transmission aufweisen und die unter den Bedingungen der Herstellung und der Verwendung der erfindungsgemäßen Gegenstände thermisch und chemisch stabil sowie dimensionsstabil sind.

Die transparenten, elektrisch isolierenden Substrate können eine beliebige dreidimensionale Form aufweisen, die durch die dreidimensionalen Formen der erfindungsgemäßen Gegenstände, die sie enthalten, vorgegeben ist. Vorzugsweise hat die dreidimensionale Form keine Schattenzonen, so dass sie insbesondere aus der Gasphase gleichmäßig beschichtet werden kann. Bevorzugt sind die Substrate planar oder leicht oder stark in einer Richtung oder in mehreren Richtungen des Raumes gebogen. Insbesondere werden planare Substrate verwendet.

Die transparenten, elektrisch isolierenden Substrate können farblos oder gefärbt sein.

Beispiele geeigneter Materialien zur Herstellung transparenter, elektrisch isolierender Substrate sind Glas und klare Kunststoffe, vorzugsweise starre klare Kunststoffe, insbesondere Polystyrol, Polyamid, Polyester, Polyvinylchlorid, Polycarbonat oder Polymethylmethacrylat.

Bevorzugt werden transparente, elektrisch isolierende Substrate aus Glas verwendet. Im Grunde kommen alle üblichen und bekannten Gläser, wie sie beispielsweise in Römpp-Online 2008 unter den Stichworten »Glas«, »Hartglas« oder »Sicherheitsglas« beschrieben werden, als Substratmaterial in Betracht. Beispiele gut geeigneter Gläser sind Floatglas, teilvorgespanntes Floatglas, vorgespanntes Floatglas, Einscheiben-Sicherheitsglas, Geräteglas, Laborglas, Kristallglas und optisches Glas, insbesondere Floatglas, teilvorgespanntes Floatglas und vorgespanntes Floatglas.

Beispiele geeigneter Gläser sind aus der deutschen Übersetzung des europäischen Patent EP 0 847 965 B1 mit dem Aktenzeichen DE 697 31 2 168 T2, Seite 8, Absatz [0053], bekannt.

Die Dicke der transparenten, elektrisch isolierenden Substrate kann breit variieren und so hervorragend den Erfordernissen des Einzelfalls angepasst werden. Vorzugsweise werden Gläser mit den Standardglasstärken von 1,0 mm bis 25 mm und bevorzugt von 1,6 mm bis 2,1 mm verwendet.

Die Größe der transparenten, elektrisch isolierenden Substrate kann breit variieren und richtet sich nach der Größe der erfindungsgemäßen Gegenstände, die sie enthalten. Demgemäß werden bevorzugt die vorstehend beschriebenen Größen angewandt.

Die transparenten, elektrisch isolierenden Substrate sind mit einer großflächigen, elektrisch leitfähigen, transparenten Beschichtung beschichtet.

»Transparent« bedeutet auch hier, dass die großflächigen, elektrisch leitfähigen, transparenten Beschichtungen für elektromagnetische Strahlung, vorzugsweise elektromagnetische Strahlung einer Wellenlänge von 300 bis 1.300 nm, insbesondere aber für sichtbares Licht, durchlässig sind. »Durchlässig« bedeutet, dass die Transmission insbesondere für sichtbares Licht >50%, bevorzugt >75% und insbesondere >80% ist. Besonders bevorzugt sind die elektrisch leitfähigen, transparenten Beschichtungen, die für IR-Strahlung undurchlässig sind, d. h., dass sie IR-Strahlung reflektieren oder absorbieren.

Die großflächige, elektrisch leitfähige, transparente Beschichtung enthält mindestens ein elektrisch leitfähiges Material oder besteht hieraus.

Demnach kann die großflächige, elektrisch leitfähige, transparente Beschichtung aus einer Schicht aus einem elektrisch leitfähigen Material oder aus mindestens zwei Schichten aus mindestens zwei unterschiedlichen elektrisch leitfähigen Materialien bestehen.

Außerdem kann die großflächige, elektrisch leitfähige, transparente Beschichtung aus mindestens einer Schicht aus einem elektrisch leitfähigen Material und mindestens einer Schicht aus einem transparenten, dielektrischen Material aufgebaut sein. Beispielsweise kann die großflächige, elektrisch leitfähige, transparente Beschichtung aus einer ersten Schicht aus einem transparenten, dielektrischen Material, einer Schicht aus einem elektrisch leitfähigen Material und einer zweiten Schicht aus dem gleichen oder einem anderen transparenten, dielektrischen Material bestehen, die in der angegebenen Reihenfolge übereinander liegen. Es ist aber auch möglich, dass die großflächige elektrisch leitfähige, transparente Beschichtung aus mindestens drei transparenten, dielektrischen Schichten und mindestens zwei elektrisch leitfähigen Schichten besteht, die abwechselnd übereinander liegen, wobei sich mindestens eine transparente, dielektrische Schicht zwischen den elektrisch leitfähigen Schichten befindet.

Beispiele geeigneter elektrisch leitfähiger Materialien sind Metalle mit hoher elektrischer Leitfähigkeit, wie Silber, Kupfer, Gold, Aluminium oder Molybdän, insbesondere Silber oder mit Palladium legiertes Silber, sowie transparente, elektrisch leitfähige Oxide (Transparent Conductive Oxides, TCO), wie sie beispielsweise in der amerikanischen Patentanmeldung US 2007/029186 A1 auf Seite 3, Absatz [0026], und Seite 4, Absatz [0034], beschrieben werden.

Vorzugsweise handelt es sich bei den TCO um Indiumzinnoxid (Indium Tin Oxide, ITO), fluordotiertes Zinndioxid (Fluor Tin Oxide, FTO), mit Aluminium, sowie gegebenenfalls zusätzlich mit Bor und/oder mit Silber dotiertes Aluminiumzinkoxid (Aluminium Zink Oxide, AZO), Zinnzinkoxid oder mit Antimon dotiertes Zinndioxid (Antimony Tin Oxide, ATO). Vorzugsweise haben die TCO einen spezifischen Widerstand ρ von 1,0 bis 5,0 x 10⁻³ Ω x m. Bevorzugt haben sie einen Flächenwiderstand R_{□} von 0,5 bis 15 Ω/□ (Ohm pro Quadrat).

Die Dicke der großflächigen, elektrisch leitfähigen, transparenten Beschichtung kann breit variieren und so hervorragend den Erfordernissen des Einzelfalls angepasst werden. Wesentlich ist dabei, dass die Dicke der elektrisch leitfähigen, transparenten Beschichtung nicht so hoch werden darf, dass sie für elektromagnetische Strahlung, vorzugsweise elektromagnetische Strahlung einer Wellenlänge von 300 bis 1.300 nm und insbesondere sichtbares Licht, undurchlässig wird.

Vorzugsweise liegt die Dicke bei 20nm bis 100 µm.

Enthält die großflächige, elektrisch leitfähige, transparente Beschichtung Metall, beträgt ihre dicke vorzugsweise 50 bis 500 nm, bevorzugt 75 bis 400 nm und insbesondere 100 bis 300 nm.

Enthält die großflächige, elektrisch leitfähige, transparente Beschichtung TCO, beträgt ihre Dicke vorzugsweise 100 nm bis 1,5 µm, bevorzugt 150 nm bis 1 µm und insbesondere 200 nm bis 500 nm.

Enthält die großflächige, elektrisch leitfähige, transparente Beschichtung mindestens eine transparente, dielektrische Schicht und mindestens eine Schicht aus Metall, beträgt ihre Dicke vorzugsweise 20 bis 100 µm, bevorzugt 25 bis 90 µm und insbesondere 30 bis 80 µm.

Beispiele geeigneter großflächiger, elektrisch leitfähiger, transparenter Beschichtungen sowie Verfahren zu ihrer Herstellung sind aus den Patentanmeldungen und Patentschriften
- US 4,010,304, Spalte 1, Zeile 67, bis Spalte 5, Zeile 35,
- US 4,565,719, Spalte 2, Zeile 3, bis Spalte 18, Zeile 51,
- US 4,655,811, Spalte 3, Zeile 56, bis Spalte 13, Zeile 63,
- US 4,985,312, Spalte 1, Zeile 64, bis Spalte 7, Zeile 25,
- US 5,111,329, Spalte 3, Zeile 32, bis Spalte 12,
- US 5,324,374, Spalte 2, Zeile 38, bis Spalte 6, Zeile 37,
- EP 0 638 528 A1, Seite 2, Zeile 19, bis Seite 10, Zeile 57,
- EP 0 718 250 A2, Seite 2, Zeile 42, des Seite 13, Zeile 44,
- DE 697 31 268 T2, Seite 3, Absatz [0011], bis Seite 7, Absatz [0051], Seite 8, Absatz [0060], bis Seite 13, Absatz [0091],
- WO 00/72635 A1, Seite 3, Zeile 16 bis 35, und
- US 7,223,940 B2, Spalte 5, Zeile 8, bis Spalte 6, Zeile 38,
bekannt. Außerdem kommen transparente Kunststofffolien, vorzugsweise auf der Basis von Polyamid, Polyurethan, Polyvinylchlorid, Polycarbonat und Polyvinylbutyral, insbesondere Polyurethan, die mit mindestens einem der vorstehend beschriebenen, elektrisch leitfähigen Materialien beschichtet sind, in Betracht.

Die großflächige, elektrisch leitfähige, transparente Beschichtung bedeckt das transparente, isolierende Substrat großflächig. Vorzugsweise sind mindestens 50%, bevorzugt mindestens 70%, besonders bevorzugt mindestens 80% und insbesondere mindestens 90% einer Oberfläche des elektrisch isolierenden, transparenten Substrats von der großflächigen, elektrisch leitfähigen, transparenten Beschichtung bedeckt. Somit kann die großflächige, elektrisch leitfähige, transparente Beschichtung das transparente, elektrisch isolierende Substrat auch vollständig bedecken.

Insbesondere im Falle der vorstehend beschriebenen planaren oder gebogenen oder gekrümmten Substrate können die großflächigen, elektrisch leitfähigen, transparenten Beschichtungen die transparenten, elektrisch isolierenden Substrate derart bedecken, dass sie von einem elektrisch isolierenden Bereich, der frei von elektrisch leitfähigem Material ist, umgeben sind. Vorzugsweise befindet sich dieser elektrisch isolierende Bereich in den Kantenbereichen der elektrisch isolierenden, transparenten Substrate.

Die Breite des elektrisch isolierenden Bereichs kann breit variieren und daher den Erfordernissen des Einzelfalls hervorragend angepasst werden. Vorzugsweise liegt die Breite bei 0,5 bis 10 cm, bevorzugt 0,5 bis 7 cm und insbesondere 0,5 bis 5 cm.

Der elektrisch isolierende Bereich kann von einer dekorativen Beschichtung bedeckt sein.

Die großflächige, elektrisch leitfähige, transparente Beschichtung ist mit zwei elektrischen Sammelschienen zur Übertragung elektrischer Leistung verbunden. Die beiden Sammelschienen sind in üblicher und bekannter Weise an zwei einander gegenüber liegenden Seiten der großflächigen, elektrisch leitfähigen, transparenten Beschichtung parallel oder im Wesentlichen parallel zueinander angeordnet. Beispiele geeigneter Sammelschienen sind aus den internationalen Patentanmeldungen WO 00/72635 A1 und 2006/091531 A2 oder den amerikanischen Patenten US 4,385,226, US 4,725,710 oder US 7,223,940 B2 bekannt.

Der erfindungsgemäße Gegenstand umfasst des Weiteren mindestens einen, insbesondere einen, örtlich begrenzten, von der elektrisch leitfähigen Beschichtung freien, transparenten Bereich, der wenigstens teilweise in Kontakt mit der großflächigen, elektrisch leitfähigen, transparenten Beschichtung steht. Vorzugsweise ist der örtlich begrenzte, von der elektrisch leitfähigen Beschichtung freie, transparente Bereich, ganz von dem elektrisch leitfähigen Material der großflächigen, elektrisch leitfähigen, transparenten Beschichtung umgeben.

Die Abmessungen des örtlich begrenzten, von der elektrisch leitfähigen Beschichtung freien, transparenten Bereichs können breit variieren. Vorzugsweise nimmt der örtlich begrenzte, von der elektrisch leitfähigen Beschichtung freie, transparente Bereich nicht mehr als 20% der Oberfläche des erfindungsgemäßen Gegenstands in Anspruch. Handelt es sich bei dem erfindungsgemäßen Gegenstand um die Windschutzscheibe eines Fortbewegungsmittel, insbesondere eines Kraftfahrzeugs, ist der örtlich begrenzte, von der elektrisch leitfähigen Beschichtung freie, transparente Bereich vorzugsweise außerhalb des Sichtbereichs des Fahrers angeordnet.

Der örtlich begrenzte, von der elektrisch leitfähigen Beschichtung freie, transparente Bereich kann unterschiedliche Funktionen erfüllen. Vorzugsweise dient der Bereich als Datenübertragungsfenster, das bevorzugt vor mindestens einem Empfänger von Daten, insbesondere von Daten, die durch elektromagnetische Strahlung übertragen werden, angeordnet ist. Speziell dient der Bereich als Kamerafeld oder Sensorfeld, das vor einer Kamera oder einem Sensor angeordnet ist, wobei die Kamera und/oder der Sensor Daten in der Form elektromagnetischer Strahlung, insbesondere aus dem sichtbaren Bereich oder dem IR-Bereich, durch den erfindungsgemäßen Gegenstand hindurch empfängt oder empfangen.

Vorzugsweise hat der örtlich begrenzte, von der elektrisch leitfähigen Beschichtung freie, transparente Bereich Abmessungen, wie sie aus dem europäischen Patent EP 1 183 912 B1, Spalte 4, Absatz [00 21], für Datenübertragungsfenster bekannt sind.

Für die vorliegende Erfindung ist es wesentlich, dass die Peripherie des örtlich begrenzten, von der elektrisch leitfähigen Beschichtung freien, transparenten Bereichs zumindest teilweise, insbesondere ganz, von einem elektrisch leitfähigen Band oder von mindestens zwei elektrisch leitfähigen Bändern umgeben ist.

»Peripherie« bedeutet, dass das elektrisch leitfähige Band nicht unmittelbar an den örtlich begrenzten, von der elektrisch leitfähigen Beschichtung freien, transparenten Bereich angrenzen muss, sondern sich in einem gewissen Abstand, vorzugsweise 5 mm bis 2 cm, hiervon befinden kann, so dass auch ein Teil der großflächigen, elektrisch leitfähigen, transparenten Beschichtung umschlossen wird.

Vorzugsweise ist das elektrisch leitfähige Band mit der Sammelschiene verbunden, besonders bevorzugt mit der Sammelschiene, die dem Datenübertragungsfenster am nächsten liegt. Insbesondere ist das elektrisch leitfähige Band mit dieser Sammelschiene derart verbunden, dass die Sammelschiene gewissermaßen einen Teil des elektrisch leitfähigen Bandes bildet.

Bevorzugt befindet sich das elektrisch leitfähige Band direkt auf der Oberfläche der großflächigen, elektrisch leitfähigen, transparenten Beschichtung.

Das elektrisch leitfähige Band kann aber auch nicht mit Stromsammelschienen verbunden sein, insbesondere wenn Bereiche ohne elektrisch leitfähige Beschichtung weit von den Stromsammelschienen entfernt liegen.

Das elektrisch leitfähige Band weist einen elektrischen Widerstand in Ohm pro Quadrat auf, der erheblich geringer ist als der elektrische Widerstand in Ohm pro Quadrat der großflächigen, elektrisch leitfähigen, transparenten Beschichtung. Vorzugsweise ist der elektrische Widerstand <0,35, bevorzugt <0,1, besonders bevorzugt <0,05 und insbesondere <0,01 Ohm pro Quadrat.

Die Abmessungen des elektrisch leitfähigen Bandes können sehr breit variieren und daher hervorragend den Erfordernissen des Einzelfalls angepasst werden. Insbesondere richten sich die Abmessungen nach dem Verhältnis der Widerstände in Ohm pro Quadrat des elektrisch leitfähigen Bandes und der großflächigen, elektrisch leitfähigen, transparenten Beschichtung sowie nach der Fläche des Teils der großflächigen, elektrisch leitfähigen, transparenten Beschichtung, die von dem elektrisch leitfähigen Band umschlossen wird. Der Fachmann kann daher die im Einzelfall vorteilhaften Abmessungen anhand seines allgemeinen Fachwissens gegebenenfalls unter Zuhilfenahme einfacher orientierender Versuche oder Computersimulationen bestimmen.

Vorzugsweise ist das elektrisch leitfähige Band 10 bis 100 µm, bevorzugt 15 bis 80 µm und insbesondere 20 bis 50 µm dick.

Vorzugsweise ist das elektrisch leitfähige Band 100 µm bis 3 cm, bevorzugt 200 µm bis 2,5 cm und insbesondere 200 µm bis 20 mm breit.

Die Länge des elektrisch leitfähigen Bandes richtet sich insbesondere nach den Abmessungen des örtlich begrenzten, von der elektrisch leitfähigen Beschichtung freien, transparenten Bereichs, das es umgibt.

Das elektrisch leitfähige Band enthält elektrisch hoch leitfähiges Material. Beispiele geeigneter Materialien werden vorstehend beschrieben.

Für die vorliegende Erfindung ist es außerdem wesentlich, dass das elektrisch leitfähige Band mindestens eine Unterbrechung oder mindestens zwei Unterbrechungen aufweist.

»Unterbrechung« bedeutet, dass ein gegebenes elektrisch leitfähiges Band durch einen Bereich, der von einem Teil der großflächigen, elektrisch leitfähigen, transparenten Beschichtung gebildet ist, unterbrochen wird.

In einer ersten Ausführungsform des erfindungsgemäßen Gegenstandes ist nur ein elektrisch leitfähiges Band vorhanden, worin sich die mindestens eine Unterbrechung befindet.

In einer zweiten Ausführungsform des erfindungsgemäßen Gegenstandes sind mindestens zwei elektrisch leitfähige Bänder vorhanden, wobei sich die mindestens zwei Unterbrechungen zwischen mindestens zwei parallelen Bereichen der mindestens zwei elektrisch leitfähigen Bänder befinden. Dabei kann mindestens eines der mindestens zwei elektrisch leitfähigen Bänder mindestens eine Unterbrechung innerhalb des Bandes aufweisen.

Bei beiden Ausführungsformen des erfindungsgemäßen Gegenstandes kann sich der Bereich eines elektrisch leitfähigen Bandes, der parallel oder im Wesentlichen parallel zu der Sammelschiene, mit der das Band verbunden ist, liegt, breiter als die Bereiche sein, die zu der zugeordneten Sammelschiene hinführen.

Erfindungsgemäß ist der größte Teil des elektrisch leitfähigen Bandes nicht mit einer Sammelschiene elektrisch leitend verbunden.

In einem erfindungsgemäßen Gegenstand kann das elektrisch leitfähige Band optisch abgedeckt werden, beispielsweise durch eine dekorative opake Beschichtung.

Enthält das elektrisch isolierende, transparente Substrat des erfindungsgemäßen Gegenstands ein Glas, kann sich zwischen seiner Oberfläche und der großflächigen, elektrisch leitfähigen, transparenten Beschichtung noch mindestens eine weitere Schicht befinden. Vorzugsweise wird die mindestens eine weitere Schicht aus der Gruppe, bestehend aus transparenten Barriereschichten und transparenten, haftvermittelnden Schichten, ausgewählt.

Geeignete transparente Barriereschichten zur Verhinderung der Diffusion von Ionen, insbesondere von Alkalimetallionen, bestehen vorzugsweise aus dielektrischen Materialien, insbesondere aus Nitriden, Oxiden und Oxidnitriden von Silicium und/oder Aluminium. Vorzugsweise haben sie eine Dicke von 30 bis 300 nm.

Geeignete transparente, haftvermittelnde Schichten bestehen ebenfalls vorzugsweise aus dielektrischen Materialien, insbesondere aus gemischten Oxiden von Zink und Zinn. Vorzugsweise haben sie eine Dicke von 3 bis 100 nm.

Liegen sowohl eine transparente Barriereschicht als auch eine transparente haftvermittelnde Schicht vor, ist die transparente Barriereschicht direkt mit der Oberfläche des elektrisch isolierenden, transparenten Substrats verbunden.

Der erfindungsgemäße Gegenstand kann in der unterschiedlichsten Art und Weise hergestellt werden. Vorzugsweise wird der erfindungsgemäße Gegenstand nach dem erfindungsgemäßen Verfahren hergestellt. Seine besonderen Vorteile entfaltet das erfindungsgemäße Verfahren insbesondere bei der Herstellung des erfindungsgemäßen Gegenstands.

Vor der Durchführung des ersten Verfahrenschritt des erfindungsgemäßen Verfahrens kann das elektrisch isolierende, transparente Substrat thermisch behandelt, gereinigt, insbesondere entfettet, und/oder poliert werden. Anschließend kann mindestens eine der vorstehend beschriebenen Barriereschichten und/oder haftvermittelnden Schichten aufgetragen werden, wobei die nachstehend beschriebenen Verfahren zur Abscheidung dünner Schichten aus der Gasphase verwendet werden können.

Im ersten Verfahrenschritt des erfindungsgemäßen Verfahrens wird ein elektrisch leitfähiges Material großflächig auf ein transparentes, elektrisch isolierendes Substrat aufgebracht, so dass mindestens eine, insbesondere eine, transparente, elektrisch leitfähige Beschichtung, die das betreffende elektrisch leitfähige Material enthält oder hieraus besteht, sowie mindestens einer der vorstehend beschriebenen örtlich begrenzten, von der elektrisch leitfähigen Beschichtung freien, transparenten Bereiche resultieren.

Zu diesem Zweck kann auf das elektrisch isolierende, transparente Substrat eine Maske aufgelegt werden, die der gewünschten Struktur der großflächigen elektrisch leitfähigen, transparenten Beschichtung und des örtlich begrenzten, von der elektrisch leitfähigen Beschichtung freien, transparenten Bereichs, entspricht. Anschließend kann mindestens ein elektrisch leitfähiges Material auf dem Substrat aus der Gasphase abgeschieden werden, wobei die nachstehend beschriebenen Verfahren verwendet werden können.

Es kann aber auch eine Oberfläche des elektrisch isolierenden, transparenten Substrats vollflächig mit dem elektrisch leitfähigen Material bedeckt werden, wonach die gewünschten Teile der resultierenden großflächigen, elektrisch leitfähigen, transparenten Beschichtung mechanisch, thermisch und/oder durch Bestrahlung mit elektromagnetischer Strahlung, insbesondere Laserstrahlung, entfernt werden. Ein vorteilhaftes Verfahren zur mechanischen Entfernung, das sehr präzise arbeitet, ist das Ultraschallhämmern. Ein vorteilhaftes Verfahren zum Entfernen mittels eines Laserstrahls wird beispielsweise in den europäischen Patentanmeldungen EP 0 827 212 A2 und EP 1 104 030 A2 beschrieben.

Für die Applikation des elektrisch leitfähigen Materials können an sich bekannte Methoden und Vorrichtungen, wie z.B. die Abscheidung aus der Gasphase, die Applikation aus der flüssigen Phase oder die Laminierung von Kunststofffolien, die mit elektrisch leitfähigen Materialien beschichtet sind, verwendet werden.

Vorzugsweise wird die großflächige, elektrisch leitfähige, transparente Beschichtung aus der Gasphase abgeschieden, wobei übliche und bekannte Verfahren wie chemische Gasphasenabscheidung (CVD) oder physikalische Gasphasenabscheidung (PVD), sowie die entsprechenden hierfür geeigneten Vorrichtungen verwendet werden können. Beispiele für CVD-Verfahren sind Sprühpyrolyse, chemische Dampfabscheidung und Sol-Gel-Abscheidung. Beispiele für PVD-Verfahren sind Elektronenstrahl-Verdampfung und Vakuum-Sputtering.

Vorzugsweise werden Sputtering-Verfahren angewandt.

Sputtering ist eine übliche und bekannte Methode zur Herstellung dünner Schichten aus Materialien, die sich nicht ohne weiteres verdampfen lassen. Dabei wird die Oberfläche eines Festkörpers geeigneter Zusammensetzung, das so genannte Target, durch Beschuss mit energiereichen Ionen aus Niederdruckplasmen, wie zum Beispiel Sauerstoffionen (O⁺) und/oder Argonionen (Ar⁺), oder Neutralteilchen zerstäubt, wonach die zerstäubten Materialien auf Substraten in der Form dünner Schichten abgeschieden werden (vgl. Römpp Online, 2008, »Sputtering«). Vorzugsweise wird das Hochfrequenz-Sputtering, kurz HF-Sputtering, oder das Magnetfeld-unterstützte Sputtering, kurz Magnetron-Sputtering (MSVD), angewandt.

Geeignete Sputtering-Verfahren werden beispielsweise in den amerikanischen Patenten US 7,223,940 B2, Spalte 6, Zeilen 25 bis 38, und US 4,985,312, Spalte 4, Seite 18, bis Spalte 7, Zeile 10, oder in der deutschen Übersetzung des europäischen Patents EP 0 847 965 B1 mit dem Aktenzeichen DE 697 31 268 T2, Seite 8, Absatz [0060], und Seite 9, Absatz [0070], bis Seite 10, Absatz [0072], beschrieben.

Im zweiten Verfahrenschritt des erfindungsgemäßen Verfahrens wird die großflächige, elektrisch leitfähige Beschichtung in üblicher und bekannter Weise mit zwei Sammelschienen verbunden, so dass bei Anlegen einer Spannung elektrische Leistung übertragen wird.

Im dritten Verfahrenschritt des erfindungsgemäßen Verfahrens wird die Peripherie des örtlich begrenzten, von der elektrisch leitfähigen Beschichtung freien, transparenten Bereichs zumindest teilweise, insbesondere ganz, mit mindestens einem der vorstehend beschriebenen elektrisch leitfähigen Bänder in der Weise umgeben, dass die vorstehend beschriebenen Unterbrechungen resultieren.

Die elektrisch leitfähigen Bänder können mithilfe unterschiedlicher geeigneter Applikationsmethoden und -vorrichtungen, z.B. durch Aufdrucken oder Pulverbeschichtung, vorzugsweise direkt auf der großflächigen, elektrisch leitfähigen, transparenten Beschichtung aufgetragen werden. Vorzugsweise werden die elektrisch leitfähigen Bänder aufgedruckt, wobei leitfähige Druckfarben, die hoch leitfähige Materialien enthalten, verwendet werden können. Nach dem Aufdrucken können die resultierenden Beschichtungen noch thermisch und/oder mit elektromagnetischer Strahlung oder Elektronenstrahlung gehärtet werden.

Anschließend können die elektrisch isolierenden, transparenten Substrate, die eine großflächige, elektrisch leitfähige, transparente Beschichtung, mindestens einen örtlich begrenzten, von der elektrisch leitfähigen Beschichtung freien, transparenten Bereich und mindestens ein elektrisch leitfähiges Band aufweisen, bei höheren Temperaturen verformt, insbesondere gebogen oder gekrümmt werden.

Die Höhe der Temperaturen richtet sich nach den Materialien, aus denen die jeweiligen isolierenden, transparenten Substrate, die großflächigen, elektrisch leitfähigen, transparenten Beschichtungen und/oder die elektrisch leitfähigen Bänder bestehen. Enthalten sie Kunststoff oder bestehen sie hieraus, darf die Temperatur nicht so hoch eingestellt werden, dass das Material schmilzt und/oder thermisch geschädigt wird. Vorzugsweise liegt die Temperatur in diesen Fällen oberhalb der Glasübergangstemperatur und unterhalb 200°C. Im Falle von Substraten aus Glas liegt die Temperatur zwischen 500 und 700°C, insbesondere zwischen 550 und 650°C.

Die erfindungsgemäßen Gegenstände und die mithilfe des erfindungsgemäßen Verfahrens hergestellten transparenten Gegenstände, insbesondere die mithilfe des erfindungsgemäßen Verfahrens hergestellten erfindungsgemäßen Gegenstände, können weitere funktionale Schichten und weitere elektrisch isolierende, transparente Substrate enthalten.

Beispiele geeigneter funktionaler Schichten sind farbgebende Schichten, Schichten, die die strukturelle Festigkeit der erfindungsgemäßen Gegenstände steigern, Licht reflektierende Schichten und Antireflexionsschichten.

Insbesondere werden Schichten, die die strukturelle Festigkeit der erfindungsgemäßen Gegenstände steigern, verwendet. Dabei kann es sich um Haftschichten, Verbundfolien, mechanische Energie absorbierende Folien und selbst heilende Folien aus Gießharzen, wie härtbare Epoxidharze, oder um thermoplastische Kunststoffe, wie Polyvinylbutyral, PVB, Poly(ethylen-vinylacetat), EVA, Polyethylenterephthalat, PET, Polyvinylchlorid, PVC, lonomerharze auf der Basis von Ethylen und/oder Propylen und alpha,beta-ungesättigten Carbonsäuren oder Polyurethan, PU, wie sie beispielsweise aus der deutschen Übersetzung des europäischen Patents EP 0 847 965 B1 mit dem Aktenzeichen DE 697 31 2 168 T2, Seite 8, Absätze [0054] und [0055], oder den internationalen Patentanmeldungen WO 2005/042246 A1, WO 2006/034346 A1 und WO 2007/149082 A1 bekannt sind, handeln.

Vorzugsweise handelt es sich bei den weiteren elektrisch isolierenden, transparenten Substraten um die vorstehend beschriebenen Substrate, insbesondere um Substrate aus Glas.

Vorzugsweise sind die weiteren elektrisch isolierenden, transparenten Substrate in ihrer Fläche und Form den erfindungsgemäßen Gegenständen angepasst, so dass sie mit diesen problemlos verbunden werden können.

Bevorzugt sind die resultierenden erfindungsgemäßen Gegenstände, die die zusätzlichen Schichten und/oder Substrate enthalten, so aufgebaut, dass der örtlich begrenzte, von der elektrisch leitfähigen Beschichtung freie, transparente Bereich und die elektrisch leitfähigen Bänder jeweils im Innern der erfindungsgemäßen Gegenstände lokalisiert sind.

Im Rahmen der erfindungsgemäßen Verwendung werden die erfindungsgemäßen Gegenstände und die mithilfe des erfindungsgemäßen Verfahrens hergestellten, transparenten Gegenstände, insbesondere die mithilfe des erfindungsgemäßen Verfahrens hergestellten erfindungsgemäßen Gegenstände, mit Vorteil in Fortbewegungsmitteln für den Verkehr zu Lande, zur Luft und zu Wasser, vorzugsweise in Kraftfahrzeugen, wie Pkw, Lastkraftwagen und Zügen, in Luftfahrzeugen und in Schiffen sowie im Möbel-, Geräte- und Bausektor, bevorzugt als transparente Bauteile, verwendet.

Besonders bevorzugt werden die erfindungsgemäßen Gegenstände in der Form von Einscheiben-Sicherheitsglasscheiben und Verbundsicherheitsglasscheiben als Fensterscheiben in Fortbewegungsmitteln, insbesondere als Windschutzscheiben für Kraftfahrzeuge, speziell Pkw, als architektonische Bauteile im Bausektor, insbesondere für Überkopfverglasungen für Dächer, Glaswände, Fassaden, Fensterscheiben, Glastüren, Balustraden, Brüstungsverglasungen, Oberlichter oder begehbares Glas, sowie als Bauteile in Möbeln und Geräten, insbesondere in Kühlschränken und Tiefkühlvitrinen, eingesetzt.

Dabei fungiert der örtlich begrenzte, von der elektrisch leitfähigen Beschichtung freie, transparente Bereich insbesondere als Datenübertragungsfenster, speziell als Kamera- und/oder Sensorfeld.

Bei Anlegen einer Spannung kommt es bei der erfindungsgemäßen Gegenständen nicht mehr oder nur in sehr geringem Umfang zur Bildung von Heiß- und Kaltstellen und/oder Lichtflecken, so dass ihre Gebrauchsdauer signifikant verlängert ist und ihre Transparenz auch nach langer Gebrauchsdauer nicht geringer wird.

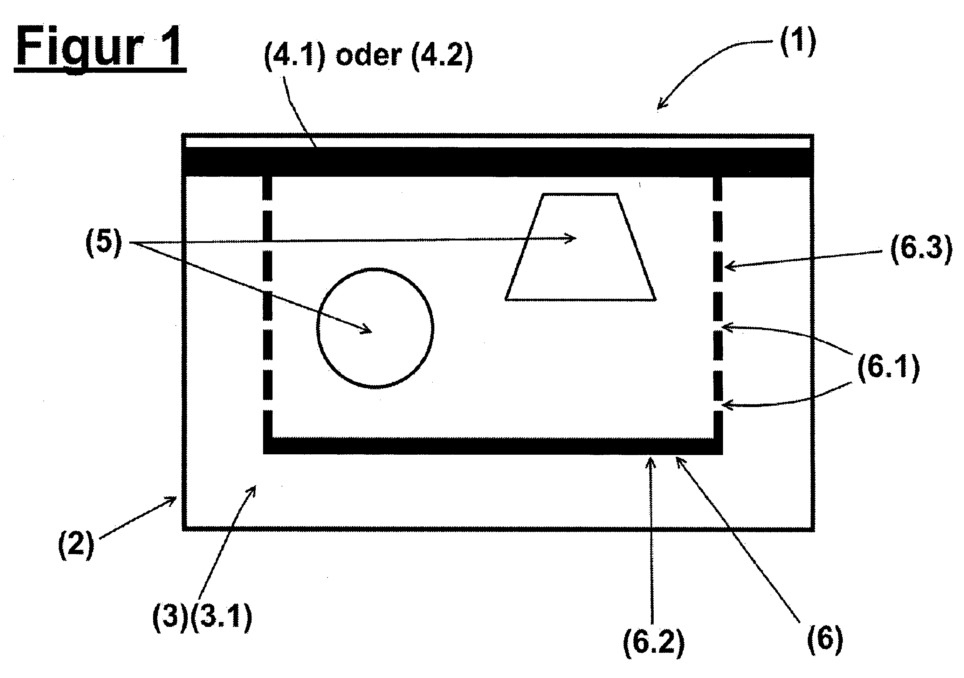

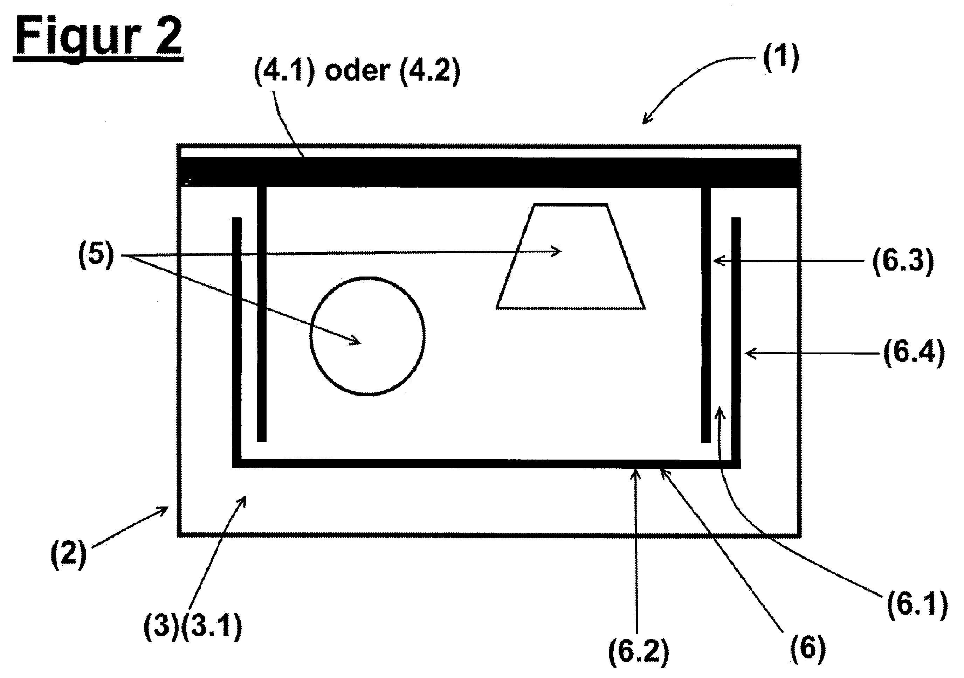

Im Folgenden wird der erfindungsgemäße Gegenstand anhand der Figuren 1 und 2 beispielhaft erläutert. Bei den Figuren 1 und 2 handelt es sich um schematische Darstellungen, die das Prinzip der Erfindung veranschaulichen sollen. Die schematischen Darstellungen brauchen daher nicht maßstabsgetreu zu sein. Die dargestellten Größenverhältnisse müssen daher auch nicht den bei der Ausübung der Erfindung in der Praxis angewandten Größenverhältnissen entsprechen.
Figur 1 zeigt eine erste Alternative für die zweite Ausführungsform der Erfindung.
Figur 2 zeigt eine zweite Alternative für die zweite Ausführungsform der Erfindung.

In den Figuren 1 und 2 haben die Bezugszeichen die folgende Bedeutung:
(1) scheibenförmiger, transparenter Gegenstand,
(2) transparentes, elektrisch isolierendes Substrat,
(3) großflächige, elektrisch leitfähige, transparente Beschichtung,
(3.1) elektrisch leitfähiges Material,
(4.1), (4.2) Sammelschiene zur Übertragung elektrischer Leistung,
(5) örtlich begrenzter, von der elektrisch leitfähigen Beschichtung freier, transparenter Bereich (Datenübertragungsfenster),
(6) elektrisch leitfähiges Band,
(6.1) Unterbrechung,
(6.2) Bereich des elektrisch leitfähigen Bandes (6), der parallel oder im Wesentlichen parallel zu der Sammelschiene (4.1 oder 4.2) liegt, mit der das Band (6) verbunden ist,
(6.3) Bereich, der zu der betreffenden Sammelschiene (4.1 oder 4.2) hinführt, und
(6.4) Bereich, der zu der betreffenden Sammelschiene (4.1 oder 4.2) hinführt, ohne diese zu erreichen.

Im Folgenden werden die erfindungsgemäßen Gegenstände der Figuren 1 und 2 der Kürze halber als »erfindungsgemäße Gegenstände 1 und 2« bezeichnet.

Bei den Substraten (2) der erfindungsgemäßen Gegenstände 1 und 2 handelt es sich um Floatglasscheiben der Abmessungen, wie sie beispielsweise für Windschutzscheiben, Seitenscheiben und Rückscheiben im Fahrzeugbau sowie in kleinen, mittleren oder großflächigen Scheiben im Möbel-, Geräte- oder Bausektor verwendet werden. Die Abmessungen können mehrere Quadratzentimeter bis mehrere Quadratmeter betragen.

Bei den Beschichtungen (3) der erfindungsgemäßen Gegenstände 1 und 2 handelt es sich jeweils um eine Beschichtung, wie sie in der der deutschen Übersetzung des europäischen Patents EP 0 847 965 B1 mit dem Aktenzeichen DE 697 31 2 168 T2, Beispiel 1, Seite 9, Absatz [0063], bis Seite 11, Absatz [0080], beschrieben wird. Diese Schicht enthält zwei Schichten aus Silber als elektrisch leitfähigem Material (3.1).

In den Beschichtungen (3) der erfindungsgemäßen Gegenstände 1 und 2 befinden sich die Datenübertragungsfenster (5).

Die Datenübertragungsfenster (5) des erfindungsgemäßen Gegenstands 1 sind von einem elektrisch leitfähigen Band (6) umgeben, das 40 µm dick ist und aus einer handelsüblichen aufgedruckten Leitfähigkeitspaste auf der Basis von Silber besteht. Sein Bereich (6.2), der parallel zu der Sammelschiene (4.1) verläuft, ist 1 mm breit. Die beiden Bereiche (6.3), über die der Bereich (6.2) mit der Sammelschiene (4.1) verbunden ist, sind 250 µm breit und weisen mehrere Unterbrechungen (6.1) auf.

Die Datenübertragungsfenster (5) des erfindungsgemäßen Gegenstands 2 sind von zwei elektrisch leitfähigen Bändern (6) umgeben, die beide 40 µm dick sind und aus einer handelsüblichen aufgedruckten Leitfähigkeitspaste auf der Basis von Silber bestehen. Das eine elektrisch leitfähige Band (6) wird von zwei zueinander parallelen, elektrisch leitfähigen Bändern (6.3) gebildet, die mit der Sammelschiene (4.1) verbunden sind. Diesen beiden Bändern (6.3) ist ein elektrisch leitfähiges Band (6) zugeordnet, das aus einem Bereich (6.2), der zu der Sammelschiene (4.1) parallel ist, sowie aus zwei Bereichen (6.4), die von dem Bereich (6.2) parallel zu den Bereichen (6.4) in Richtung Sammelschiene (4.1) verlaufen, mit dieser aber nicht verbunden sind, besteht. Infolge dieser Konfiguration befinden sich die Unterbrechungen (6.1) im Wesentlichen zwischen den Bereichen (6.4) des äußeren elektrisch leitfähigen Bandes (6) und den Bereichen (6.3) des inneren elektrisch leitfähigen Bandes (6).

Die erfindungsgemäßen Gegenstände 1 und 2 werden jeweils mit einer Haftfolie aus Polyvinylbutyral PVB (nicht abgebildet) und einer Floatglasscheibe (nicht abgebildet) mithilfe eines Vorverbundverfahrens (Kalanderwalzen-, Schlangen- oder Vakuumsackverfahren) und einem Autoklavverfahren haftfest miteinander verbunden, so dass ein für eine Verbundsicherheitsglasscheibe typischer Aufbau »Floatglasscheibe (1)/Beschichtung (3) mit Datenübertragungsfenster (5) und Band (6)/Haftfolie/Floatglasscheibe« resultiert.

Bei Anlegen einer elektrischen Spannung von 12 bis 14 V an die Sammelschienen (4.1) und (4.2) der Verbundsicherheitsglasscheiben fließt ein Strom durch den Bereich (3), wodurch sich dieser auf 50°C erhitzt, ohne dass sich Heiß- und Kaltstellen oder Lichtflecken bilden.

## Patentansprüche

1. Elektrisch großflächig beheizbarer transparenter Gegenstand (1), umfassend:
a. mindestens ein transparentes, elektrisch isolierendes Substrat (2),
b. mindestens eine großflächige, elektrisch leitfähige, transparente Beschichtung (3), die mit zwei elektrischen Sammelschienen (4.1 und 4.2) zur Übertragung elektrischer Leistung verbunden ist,
c. mindestens einen örtlich begrenzten, von der elektrisch leitfähigen Beschichtung (3) freien, transparenten Bereich (5) und
d. ein elektrisch leitfähiges Band (6), aufgebracht auf der Beschichtung (3), das die Peripherie des mindestens einen Bereichs (5) zumindest teilweise umgibt und einen elektrischen Widerstand in Ohm pro Quadrat aufweist, der geringer ist als der elektrische Widerstand der Beschichtung (3) in Ohm pro Quadrat,
**dadurch gekennzeichnet, dass** das elektrisch leitfähige Band (6) mindestens eine Unterbrechung (6.1) aufweist, wobei der größte Teil des elektrisch leitfähigen Bandes (6) nicht mit einer der Sammelschienen (4.1, 4.2) verbunden ist.

2. Elektrisch großflächig beheizbarer, transparenter Gegenstand (1) nach Anspruch 1, wobei nur ein elektrisch leitfähiges Band (6) vorhanden ist, worin sich die mindestens eine Unterbrechung (6.1) befindet.

3. Elektrisch großflächig beheizbarer, transparenter Gegenstand (1) nach Anspruch 1, wobei das elektrisch leitfähige Band (6) mindestens zwei Unterbrechungen (6.1) aufweist.

4. Elektrisch großflächig beheizbarer, transparenter Gegenstand (1) nach Anspruch 3, wobei mindestens zwei elektrisch leitfähige Bänder (6) vorhanden sind, wobei sich die mindestens zwei Unterbrechungen (6.1) zwischen mindestens zwei parallelen Bereichen der mindestens zwei elektrisch leitfähigen Bänder (6) befinden.

5. Elektrisch großflächig beheizbarer, transparenter Gegenstand (1) nach Anspruch 4, wobei mindestens eines der mindestens zwei elektrisch leitfähigen Bänder (6) mindestens eine Unterbrechung (6.1) innerhalb des Bandes aufweist.

6. Elektrisch großflächig beheizbarer, transparenter Gegenstand (1) nach einem der Ansprüche 1 bis 5, wobei das elektrisch leitfähige Band (6) die Peripherie des Bereichs (5) vollständig umgibt.

7. Elektrisch großflächig beheizbarer, transparenter Gegenstand (1) nach einem der Ansprüche 1 bis 6, wobei das elektrisch leitfähige Band (6) eine Dicke von 10 bis 100 µm hat.

8. Elektrisch großflächig beheizbarer, transparenter Gegenstand (1) nach einem der Ansprüche 1 bis 7, wobei das elektrisch leitfähige Band (6) einen elektrischen Widerstand < 0,35 Ohm pro Quadrat hat.

9. Elektrisch großflächig beheizbarer, transparenter Gegenstand (1) nach einem der Ansprüche 1 bis 8, wobei das elektrisch leitfähige Band (6) eine Breite von 500 µm bis 3 cm hat.

10. Elektrisch großflächig beheizbarer, transparenter Gegenstand (1) nach einem der Ansprüche 1 bis 9, wobei der Bereich (6.2) des elektrisch leitfähigen Bandes (6), der parallel oder im Wesentlichen parallel zu der Sammelschiene (4.1 oder 4.2), mit der das betreffende Band (6) verbunden ist, liegt, breiter ist als die Bereiche (6.3), die zu der betreffenden Sammelschiene (4.1 oder 4.2) hinführen.

11. Verfahren zur Herstellung eines elektrisch großflächig beheizbaren, transparenten Gegenstands (1) nach einem der Ansprüche 1 bis 10, wobei
(I) ein elektrisch leitfähiges Material (3.1) großflächig auf ein transparentes, elektrisch isolierendes Substrat (2) aufgebracht wird, wobei mindestens eine transparente, elektrisch leitfähige Beschichtung (3), die das Material (3.1) enthält, und mindestens ein örtlich begrenzter, von der elektrisch leitfähigen Beschichtung (3) freier, transparenter Bereich (5) erzeugt wird,
(II) die Beschichtung (3) mit zwei Sammelschienen (4.1 und 4.2) verbunden wird und
(III) in die Peripherie des mindestens einen Bereichs (5) auf die Beschichtung (3) zumindest teilweise ein elektrisch leitfähiges Band (6) aufgebracht wird, wobei das Band (6) mindestens eine Unterbrechung (6.1) aufweist und einen elektrischen Widerstand in Ohm pro Quadrat aufweist, der geringer ist als der elektrische Widerstand der Beschichtung (3) in Ohm pro Quadrat, wobei der größte Teil des elektrisch leitfähigen Bandes (6) nicht mit einer der Sammelschienen (4.1, 4.2) verbunden wird.

12. Verfahren nach Anspruch 11, wobei mindestens ein elektrisch leitfähiges Band (6) im Verfahrenschritt (III) auf die großflächige, elektrisch leitfähige Beschichtung (3) aufgedruckt wird.

13. Verwendung des elektrisch großflächig beheizbaren, transparenten Gegenstands gemäß einem der Ansprüche 1 bis 10 in Fortbewegungsmitteln für den Verkehr zu Lande, zur Luft und zu Wasser sowie im Möbel-, Geräte- und Bausektor.

14. Verwendung nach Anspruch 13, wobei mindestens ein örtlich begrenzter, von der elektrisch leitfähigen Beschichtung freier, transparenter Bereich (5) als Datenübertragungsfenster fungiert.

## Claims

1. Electrically extensively heatable, transparent object (1), comprising:
a. at least one transparent, electrically insulating substrate (2),
b. at least one extensive, electrically conductive, transparent coating (3) that is connected to two electrical busbars (4.1 and 4.2) to transmit electrical power,
c. at least one localized transparent area (5) free of the electrically conductive coating (3), and
d. an electrically conductive band (6) applied on the coating (3) that at least partially surrounds the periphery of the at least one area (5) and has an electrical resistance in ohms per square that is lower than the electrical resistance of the coating (3) in ohms per square,
**characterized in that** the electrically conductive band (6) has at least one interruption (6.1), wherein the greater part of the electrically conductive band (6) is not connected to one of the busbars (4.1, 4.2).

2. Electrically extensively heatable, transparent object (1) according to claim 1, wherein there is only one electrically conductive band (6), in which the at least one interruption (6.1) is situated.

3. Electrically extensively heatable, transparent object (1) according to claim 1, wherein the electrically conductive band (6) has at least two interruptions (6.1).

4. Electrically extensively heatable, transparent object (1) according to claim 3, wherein there are at least two electrically conductive bands (6), wherein the at least two interruptions (6.1) are located between at least two parallel areas of the at least two electrically conductive bands (6).

5. Electrically extensively heatable, transparent object (1) according to claim 4, wherein at least one of the at least two electrically conductive bands (6) has at least one interruption (6.1) within the band.

6. Electrically extensively heatable, transparent object (1) according to one of claims 1 through 5, wherein the electrically conductive band (6) completely surrounds the periphery of the area (5).

7. Electrically extensively heatable, transparent object (1) according to one of claims 1 through 6, wherein the electrically conductive band (6) has a thickness of 10 to 100 µm.

8. Electrically extensively heatable, transparent object (1) according to one of claims 1 through 7, wherein the electrically conductive band (6) has an electrical resistance of < 0.35 Ohms per square.

9. Electrically extensively heatable, transparent object (1) according to one of claims 1 through 8, wherein the electrically conductive band (6) has a width of 500 µm to 3 cm.

10. Electrically extensively heatable, transparent object (1) according to one of claims 1 through 9, wherein the area (6.2) of the electrically conductive band (6) that lies parallel or substantially parallel to the busbar (4.1 or 4.2), to which the relevant band (6) is connected, is wider than the areas (6.3) that lead to the relevant busbar (4.1 or 4.2).

11. Method for producing an electrically extensively heatable, transparent object (1), according to one of claims 1 through 10, wherein
(I) an electrically conductive material (3.1) is applied extensively on a transparent, electrically insulating substrate (2), wherein at least one transparent, electrically conductive coating (3) that contains the material (3.1) and at least one localized transparent area (5) free of the electrically conductive coating (3) are created,
(II) the coating (3) is connected to two busbars (4.1 and 4.2), and
(III) an electrically conductive band (6) is applied to the coating (3) at least partially in the periphery of the at least one area (5), with the band (6) having at least one interruption (6.1) and having an electrical resistance in ohms per square that is lower than the electrical resistance of the coating (3) in ohms per square, wherein the greatest part of the electrically conductive band (6) is not connected to one of the busbars (4.1,4.2).

12. Method according to claim 11, wherein, in the process step (III), at least one electrically conductive band (6) is printed onto the extensive, electrically conductive coating (3).

13. Use of the electric extensively heatable, transparent object according to one of claims 1 through 10 in means of transportation for land, air, and water traffic as well as in the furniture, equipment, and construction sector.

14. Use according to claim 13, wherein at least one localized transparent area (5) free of the electrically conductive coating functions as a data transmission window.

## Revendications

1. - Objet (1), transparent, pouvant être chauffé électriquement sur une grande surface, comportant :
a. au moins un substrat (2) électriquement isolant, transparent ;
b. au moins un revêtement (3) transparent conducteur de l'électricité, de grande surface, qui est connecté à deux barres omnibus électriques (4.1 et 4.2) pour la transmission de la puissance électrique ;
c. au moins une zone (5) transparente, exempte du revêtement (3) conducteur de l'électricité, délimitée localement ; et
d. une bande (6) conductrice de l'électricité, appliquée sur le revêtement (3), qui entoure au moins partiellement la périphérie de la au moins une zone (5) et présente une résistance électrique en ohm par carré qui est inférieure à la résistance électrique du revêtement (3) en ohm par carré,
**caractérisé par le fait que** la bande (6) conductrice de l'électricité présente au moins une interruption (6.1), la plus grande partie de la bande (6) conductrice de l'électricité n'étant pas connectée à l'une des barres omnibus (4.1, 4.2).

2. - Objet (1), transparent, pouvant être chauffé électriquement sur une grande surface, selon la revendication 1, dans lequel seule une bande (6) conductrice de l'électricité est présente, dans laquelle se trouve la au moins une interruption (6.1).

3. - Objet (1), transparent, pouvant être chauffé électriquement sur une grande surface, selon la revendication 1, dans lequel la bande (6) conductrice de l'électricité présente au moins deux interruptions (6.1).

4. - Objet (1), transparent, pouvant être chauffé électriquement sur une grande surface, selon la revendication 3, dans lequel au moins deux bandes (6) conductrices de l'électricité sont présentes, les au moins deux interruptions (6.1) se trouvant entre au moins deux zones parallèles des au moins deux bandes (6) conductrices de l'électricité.

5. - Objet (1), transparent, pouvant être chauffé électriquement sur une grande surface, selon la revendication 4, dans lequel au moins l'une des au moins deux bandes (6) conductrices de l'électricité présente au moins une interruption (6.1) à l'intérieur de la bande.

6. - Objet (1), transparent, pouvant être chauffé électriquement sur une grande surface, selon l'une des revendications 1 à 5, dans lequel la bande (6) conductrice de l'électricité entoure totalement la périphérie de la zone (5).

7. - Objet (1), transparent, pouvant être chauffé électriquement sur une grande surface, selon l'une des revendications 1 à 6, dans lequel la bande (6) conductrice de l'électricité a une épaisseur de 10 à 100 µm.

8. - Objet (1), transparent, pouvant être chauffé électriquement sur une grande surface, selon l'une des revendications 1 à 7, dans lequel la bande (6) conductrice de l'électricité a une résistance électrique < 0,35 ohm par carré.

9. - Objet (1), transparent, pouvant être chauffé électriquement sur une grande surface, selon l'une des revendications 1 à 8, dans lequel la bande (6) conductrice de l'électricité a une largeur de 500 µm à 3 cm.

10. - Objet (1), transparent, pouvant être chauffé électriquement sur une grande surface, selon l'une des revendications 1 à 9, dans lequel la zone (6.2) de la bande (6) conductrice de l'électricité, qui se situe parallèlement ou sensiblement parallèlement à la barre omnibus (4.1 ou 4.2), avec laquelle la bande en question (6) est connectée, est plus large que les zones (6.3) qui conduisent à la barre omnibus en question (4.1 ou 4.2).

11. - Procédé de fabrication d'un objet (1), transparent, pouvant être chauffé électriquement sur une grande surface, selon l'une des revendications 1 à 10, dans lequel
(I) une matière (3.1) conductrice de l'électricité est appliquée sur une grande surface sur un substrat (2) électriquement isolant, transparent, à l'occasion de quoi au moins un revêtement (3) conducteur de l'électricité, transparent, qui contient la matière (3.1), et au moins une zone (5) transparente, exempte du revêtement (3) conducteur de l'électricité, délimitée localement, sont produits ;
(II) le revêtement (3) est connecté à deux barres omnibus (4.1 et 4.2) ; et
(III) à la périphérie de la au moins une zone (5) sur le revêtement (3) est appliquée au moins partiellement une bande (6) conductrice de l'électricité, la bande (6) présentant au moins une interruption (6.1) et présentant une résistance électrique en ohm par carré qui est inférieure à la résistance électrique du revêtement (3) en ohm par carré, la plus grande partie de la bande (6) conductrice de l'électricité n'étant pas connectée à l'une des barres omnibus (4.1,4.2).

12. - Procédé selon la revendication 11, dans lequel au moins une bande (6) conductrice de l'électricité est imprimée dans l'étape de procédé (III) sur le revêtement (3) conducteur de l'électricité, de grande surface.

13. - Utilisation de l'objet transparent, pouvant être chauffé électriquement sur une grande surface, selon l'une des revendications 1 à 10 dans des moyens de locomotion pour le trafic par terre, par air et par eau ainsi que dans le secteur de l'ameublement, de l'équipement et de la construction.

14. - Utilisation selon la revendication 13, dans laquelle au moins une zone (5) transparente, exempte du revêtement conducteur de l'électricité, délimitée localement, fait fonction de fenêtre de transmission de données.
